(19) **Europäisches Patentamt / European Patent Office / Office européen des brevets**

(11) **EP 2 278 782 B1**

(12) **EUROPEAN PATENT SPECIFICATION**

(45) Date of publication and mention
of the grant of the patent:
**19.10.2016 Bulletin 2016/42**

(21) Application number: **08748457.2**

(22) Date of filing: **05.05.2008**

(51) Int Cl.:
**H04M 3/42** *(2006.01)*    **H04M 3/523** *(2006.01)*

(86) International application number:
**PCT/CN2008/000899**

(87) International publication number:
**WO 2009/135333 (12.11.2009 Gazette 2009/46)**

(54) **A METHOD AND EQUIPMENT FOR PROVIDING INFORMATION TO THE USER TERMINAL IN THE CALL WAITING QUEUE**

VERFAHREN UND GERÄTE ZUR BEREITSTELLUNG VON INFORMATIONEN FÜR DAS BENUTZERENDGERÄT IN DER CALL-WAITING-WARTESCHLANGE

PROCÉDÉ ET MATÉRIEL POUR FOURNIR DES INFORMATIONS AU TERMINAL UTILISATEUR DANS UNE FILE D'ATTENTE D'APPELS

(84) Designated Contracting States:
**AT BE BG CH CY CZ DE DK EE ES FI FR GB GR HR HU IE IS IT LI LT LU LV MC MT NL NO PL PT RO SE SI SK TR**

(43) Date of publication of application:
**26.01.2011 Bulletin 2011/04**

(73) Proprietor: **Alcatel Lucent**
**92100 Boulogne-Billancourt (FR)**

(72) Inventors:
• **YANG, Jing**
**Qingdao**
**Shandong 266101 (CN)**
• **SHENG, Jinhui**
**Qingdao**
**Shandong 266101 (CN)**
• **ZHAO, Ke**
**Qingdao**
**Shandong 266101 (CN)**
• **LV, Yanjie**
**Qingdao**
**Shandong 266101 (CN)**

(74) Representative: **Berthier, Karine**
**Alcatel-Lucent International**
**148/152, route de la Reine**
**92100 Boulogne-Billancourt (FR)**

(56) References cited:
**WO-A1-02/093893        CN-A- 1 200 215**
**US-A- 4 788 715        US-A- 5 020 095**
**US-A1- 2005 157 865        US-A1- 2007 230 683**

## Description

## FIELD OF THE INVENTION

The present invention relates to a communication network, especially, relates to a method and apparatus for a subscriber terminal in a call-waiting queue to query the information of the position of the subscriber terminal in the call-waiting queue in a communication network supporting voice calls and video calls.

## BACKGROUND OF THE INVENTION

At present, voice sessions mainly depend on traditional PSTN (Public Switched Telephone Network) and VoIP (Voice over IP) based on SIP (Session Initial Protocol). In voice session circumstances comprising but not limited to the aforesaid voice session circumstances, various hotlines are provided for the best convenience of people according to people's requirements, such as emergency call, government hotline, First Aid hot line, Electricity-Gas-Water hot line and hot line of accusation to administration for industry and commerce.

Because hotlines have brought people so much convenience, people's dependence on hot lines are growing. Take "120" which is the dedicated hotline for First Aid in China as instance, the First Aid system needs a considerable number of serving terminals (generally referred as "operator") to serve calling parties all day long. Especially, addresses of the persons needing help, contact manners, symptoms provided by the calling party must be taken down, aiming at meeting the need of the patients as well as possible. However, in some special phases, e.g. in peak seasons for diseases when season changes or festivals and special days, the sudden change of the climate and improperly setting off of the fireworks and crackers may lead to diseases or injuries easily, and the limited operators may be unable to answer every call immediately when it comes in.

Therefore, PSTN and IP network using VoIP technology make use of switches and SIP application servers to monitor the status of busy/idle of every operator, and establish a connection between the calling party (a subscriber terminal calling the hotline) and an idle operator. In case that all operators are keeping busy when a subscriber dials in, the switch or the SIP application server will put the calling party into a call-waiting queue, and maintain this call. With time goes by, subscriber terminals in front of the subscriber terminal in the queue will quit the queue one by one when they get answered or hang off, the position of the subscriber terminal in the call-waiting queue keeps moving towards unless the subscriber terminal connects with an idle operator or hangs off. Hereunder, a switch and an SIP application server are both referred to as a queue information serving device (QISD).

However, if a subscriber terminal is only put into such a call-waiting queue without telling him/her about the position in the call-waiting queue (e.g. position 22), the subscriber calling the hot line via the subscriber terminal has no information for him/her to judge whether he/she will keep waiting in the queue or dial the hot line later.

In this regard, PSTN and IP network both have corresponding strategies. For example, in PSTN, a switch will inform a subscriber terminal of its position in a call-waiting queue after putting it into the call-waiting queue. For example, if there are 12 unanswered and online subscriber terminals in front of this subscriber terminal in the queue, the switch will inform the subscriber terminal that "your position is position 13". The position will be informed to the subscriber terminal in the following manner:

- The switch generates an informing message and send it to the subscriber terminal. The informing message comprises an optional parameter named as "Cause Indicator", and one domain of the Cause Indicator is called as "Cause Value". When the call is put in the queue, the Cause Value is set as "35" to indicate that the call has been put in the call-waiting queue. After that the switch provides the indicating message indicating the position of the subscriber terminal in the call-waiting queue to a multimedia server and the multimedia will inform the position of the subscriber terminal via multimedia information when the multimedia sets up a connection with the subscriber terminal. For example, a piece of automatic voice content of "Your position is position 13" is generated by identifying the indicating information of "13".

However, after putting the subscriber terminal into the queue and informing the position for one time, the switch will not provide information of the updated position to the subscriber terminal any more.

In an IP network, an SIP application server will also inform a subscriber terminal of its position in the call-waiting queue after putting it into a call-waiting queue. In addition, SIP further defines another optional manner for providing position information to a subscriber terminal, that is, a manner of informing the subscriber terminal of its updated position in the call-waiting queue once the length of the call-waiting queue has changed. Just as recorded in RFC3261, "The server MAY issue several 182 (Queued) responses to update the caller about the status of the queued call."

However, the aforesaid optional manner has a crucial drawback, i.e., if a subscriber terminal is located at the end of a queue with a length of 200, then, before getting answered by an operator, the subscriber terminal will get more than 100 times of notifications of updated position, and the very frequent notifications of position information will bother the subscriber dialing the hotline. Moreover, too many notifications of queue position will occupy the precious network resources and processing resources of the QISD, and it is not quite economical.

Besides the problems as stated above, the mechanism of queue information service in PSTN and IP network have a common drawback, that is, neither of them support the query of queue position initialized by a subscriber terminal and the subscriber terminal is passive.

Therefore, people need an optimized method of providing information to subscriber terminal in a call-waiting queue, in order to solve aforesaid problems in prior art. Document WO02/093893 discloses a method according to preamble of claim 1.

## SUMMARY OF THE INVENTION

To solve the problems in prior art, objects of the present invention is to provide a new set of methods and means, in QISD, for providing information to a subscriber terminal in a call-waiting queue and to provide the corresponding method and apparatus for obtaining relevant information for a subscriber terminal. The QISD creatively provides the position of the subscriber terminal, which makes the request, in the call-waiting queue to the subscriber terminal according to the voluntary request from the subscriber terminal. To achieve the objects above:

According to a first aspect of the present invention, there is provided a method, in a queue information serving device in a communication network, of proving information to a subscriber terminal in a call-waiting queue according to claim 1.

According to a third aspect of the present invention, there is provided an information providing means, in a queue information serving device, for proving information to a subscriber terminal in a call-waiting queue according to claim 9.

Also disclosed is an information obtaining means for obtaining information in a subscriber terminal in a communication network. The information obtaining means comprises: a generating means for generating a queue position information, request message; a sending means for sending the queue position information request message to a queue information serving device to request the queue information serving device to provide the information in relation to the position of the subscriber terminal in the call-waiting queue to the subscriber terminal; an obtaining means for obtaining the information in relation to the position of the subscriber terminal in the call-waiting queue which is provided by the queue information serving device; an informing means for informing the obtained information in relation to the position of the subscriber terminal in the call-waiting queue to a subscriber using the subscriber terminal.

The technical solution provided in the present invention ends the history in which subscriber terminals can only get the position related information passively. A subscriber terminal can trigger a query of its position.in a call-waiting queue on its own initiative, and QISD sends position related information to the subscriber terminal in respond to the query; hence, the automatic service provided by QISD is more reasonable and more humanistic. Other features of the present invention will become more apparent with the description in respect to the following preferable examples.

## DESCRIPTION OF THE DRAWINGS

Further features, advantages and characteristics of the present invention will now be explained in more detail with reference to the Figures of the accompanying drawings. Therein, same or similar references denote same or similar step features or means (module) features.

Fig.1 shows a block diagram of communication networks to which the present invention is applied;
Fig.2 shows a flow chart of a system method, in a communication network, of providing information to a subscriber terminal in a call-waiting queue according to an embodiment of the present invention;
Fig.3 shows a flow chart of a system method, in an IP network based on SIP, of providing information to a subscriber terminal in a call-waiting queue, according to an embodiment of the present invention;
Fig.4 shows a block diagram of the information providing means, in QISD of a communication network, for providing information to a subscriber terminal in a call-waiting queue according to an embodiment of the present invention;
Fig.5 shows a block diagram of the information obtaining means, in a subscriber terminal of a communication network, for obtaining information according to an embodiment of the present invention.

## DETALED DESCRIPTION

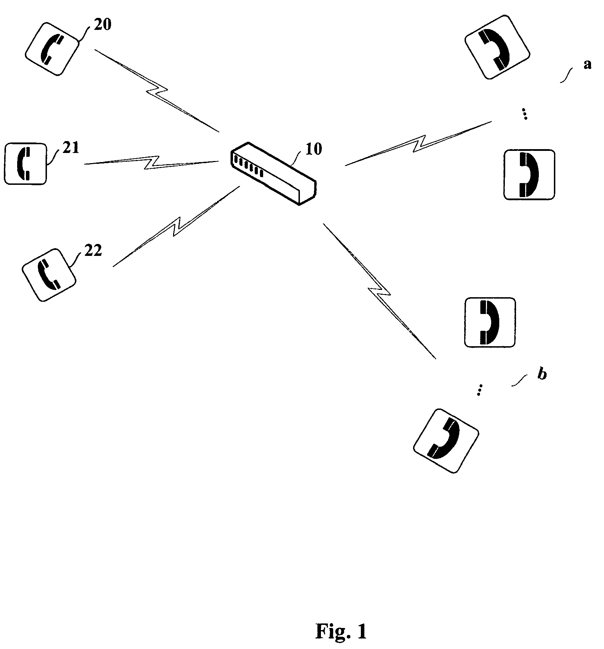

Fig.1 shows a block diagram of communication networks to which the present invention is applied. For the purpose of conciseness, it only shows the devices directly relating to the present invention, i.e. multiple subscriber terminals 20, 21, 22 and a queue information serving device 10. Besides, two operator groups a, b are also shown. Operator groups a, b are both under the control of QISD 10 and each of them has a distinctive identification (ID) such as the phone number of the relevant hotline. Herein, it is presumed that the ID of operator group a is "120" and the ID of operator group b is "114".

QISD 10 is typically a switch for PSTN, while QISD 10 is an SIP application server for an IP network.

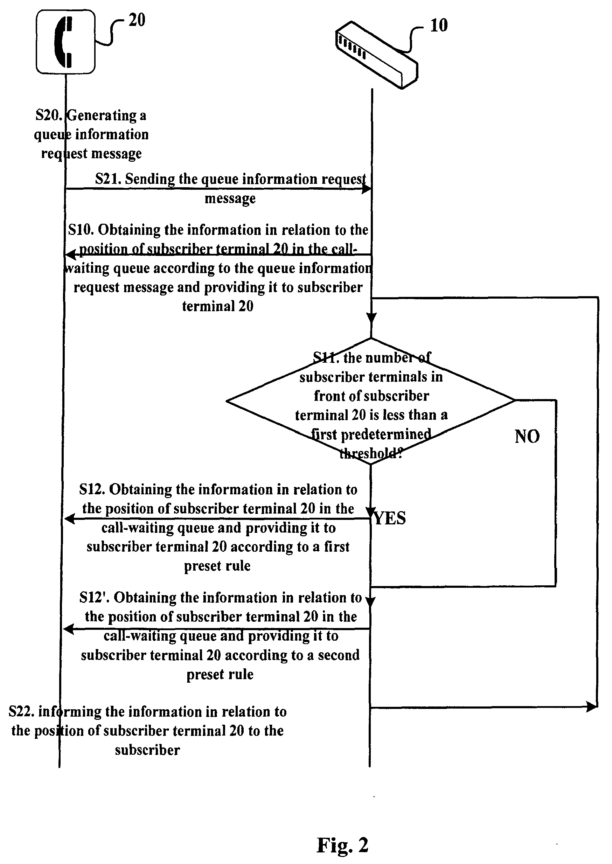

The present invention will be described with reference to Fig.2 and in conjunction with Fig. 1. Fig. 2 shows a flow chart of a system method, in a communication network, of providing information to a subscriber terminal in a call-waiting queue according to an embodiment of the present invention. Take the dialing of hotline "120" by subscriber terminal 20 as example.

The subscriber of subscriber terminal 20 picks up the phone and dials "120" which is the hotline for First Aid. Then, based on the existing techniques, subscriber terminal 20 will generate a message and send it to QISD 10. The message comprises an indicating information for indicating the operator group with which the subscriber terminal 20 wants to establish a connection. In this example, the message can carry information as "120" at a particular position of it.

When the message arrives at QISD 10, QISD 10 will parse information "120" out and check the status of every operator in operator group a corresponding to "120" in pre-stored operator status information. If there is at least one idle operator, QISD 10 will control to establish a connection between subscriber terminal 20 and the idle operator, and change the status corresponding to the operator into "Busy" in the pre-stored operator status information.

If every operator is busy and there is no idle operator in operator group a, QISD 10 will put subscriber terminal 20 in a call-waiting queue corresponding to "120". Preferably, after putting subscriber terminal 20 in the call-waiting queue, QISD 10 informs the current position of subscriber terminal 20 in the call-waiting queue which is presumed as position 113 to subscriber terminal 20.

In QISD 10, the call-waiting queues corresponding to each operator group can be maintained as a list and the list comprises the IDs of every operator group (such as the hotline number "120" corresponding to operator group a), and the ID information of all subscriber terminals in each queue (such as their corresponding logical numbers). As an example shown in Table 1, the call-waiting queues are identified with the numbers of their corresponding hotlines. The ID information (logical number) of subscriber terminal 20 is presumed as 24120000, subscriber terminal 21,22 shown in Fig. 1 are also in the call-waiting queue and are located at the first and second position respectively. Their logical numbers are 54740000 and 26430000 respectively.

Table 1 : the status of the queues when subscriber terminal 20 has just been put in the call-waiting Queue

| Call-waiting queue 120 | |
| --- | --- |
| ID of subscriber terminals | position |
| 54740000 | 1 |
| 26430000 | 2 |
| ... | ... |
| ... | ... |
| 24120000 | 113 |
| Call-waiting queue 114 | |
| ID of subscriber terminals | position |
| 12340000 | 1 |

(continued)

| Call-waiting queue 114 | |
| --- | --- |
| ID of subscriber terminals | position |
| 56780000 | 2 |
| ... | ... |
| ... | ... |
| 43210000 | 26 |

Those skilled in this art understand that the items in table 1 will change when some particular events happen, e.g., a new subscriber terminal joins the queue, some subscriber terminals in the queue get answered by operators or some subscriber terminals hang off and quit the queue.

After that, subscriber terminal 20 stays in the queue and does not hang off. A while later (such as one minute later), the subscriber at subscriber terminal 20 triggers the query of position related information to know its current position. Hence, the subscriber presses a particular button (e.g. "#") on the input panel of subscriber terminal 20 or chooses according to a menu provided by the subscriber terminal 20 to trigger the query. If it is detected that the subscriber has pressed the particular button or selected the corresponding menu item in the menu, in step S20, subscriber terminal 20 generates a queue position information request message. If a subscriber terminal can only show up in one call-waiting queue at one time point, the generated message can only carry the ID information of subscriber terminal 20 and needs not to carry the ID information of the queue in which subscriber terminal 20 is put. If a subscriber terminal can show up in more than one call-waiting queues at the same time, step S20 can be implemented in any one of the following optional ways: 1) At first, subscriber terminal 20 shifts to the call-waiting queue to be queried, and then performs the query. In this scenario, the ID of the queue needs not to be carried in the generated queue position information request message; 2) subscriber terminal 20 provides a shortcut for the subscriber to query the positions of subscriber terminal 20 in all call-waiting queues at one time. For example, The subscriber presses a particular button such as "*" on the phone or selects a menu item on the menu provided by subscriber terminal 20, subscriber terminal 20 will generate queue position information request messages for all of the queues in which subscriber terminal 20 is put respectively, and send the generated messages to QISD 10. In this case, it is necessary for the queue information request messages to carry the queue ID to help QISD 10 to know which queue is the queue that the received queue information request message is in relation to among the queues that subscriber terminal 20 is in, so that QISD 10 can give a corresponding feedback. Hereunder, it is presumed that the queue position information request message always carries the ID information of the subscriber terminal and the ID information of the queue in which the subscriber terminal is located.

Then, in step S21, the generated queue position information request message is sent to QISD 10.

The method then steps into step S10, after receiving the queue position information request message from subscriber terminal 20, according to the ID information of subscriber terminal 20 and the ID information of the call-waiting queue which are included in the message, QISD 10 obtains the information in relation to the position of the subscriber terminal. According to the above description, those skilled in this art understand that a time period has passed since subscriber terminal 20 joined the queue. The items in Table 1 may change and it is presumed that they are updated as shown in Table 2.

Table 2: the status of the queues when subscriber terminal 20 queries for position.

| Call-waiting queue 120 | |
| --- | --- |
| ID of subscriber terminals | position |
| 54740000 | 1 |
| 26430000 | 2 |
| ... | ... |
| ... | ... |
| 24120000 | 98 |
| 98760000 | 99 |
| Call-waiting queue 114 | |
| ID of subscriber terminals | position |
| 56780000 | 1 |
| ... | ... |
| ... | ... |
| 43210000 | 25 |

By comparing Table 1 with Table 2, it can be seen that 15 subscriber terminals among the 112 subscriber terminals which were in front of subscriber terminal 20 have left the queue. The current position of subscriber terminal 20 is position 98, and a subscriber terminal with logical number "98760000" has dialed "120" after subscriber terminal 20 and it is put in call-waiting queue 120.

For call-waiting queue 114, it is presumed that the subscriber terminal numbered "12340000" in the first position of the queue has got answered by an operator and quits the queue and there is no new subscriber terminal which dials in.

According to "24120000" and "120" in the queue position information request message sent by subscriber terminal 20, QISD 10 conducts a search in Table 2, and finds that the current position of subscriber terminal 20 in queue "120" is 98. Then, a queue information notification message comprising the position information is generated and sent to subscriber terminal 20.

In this way, subscriber terminal 20 gets its position in call-waiting queue "120" by inquiring initiatively.

In following step S22, subscriber terminal 20 informs the obtained information in relation to the position of subscriber terminal 20 in the call-waiting queue to the subscriber using the subscriber terminal by means of voice signal or display screen.

Certainly, steps S20, S21 can be triggered by other events besides a manual action of the subscriber. For example, subscriber terminal 20 times with an inner timer since subscriber terminal 20 joins call-waiting queue "120". When a predetermined time period has passed, (e.g. 30 seconds or 60 seconds), subscriber terminal 20 performs step S20 automatically to generate a queue position information request message and sends the message to QISD 10 in step S21. The subscriber can operate the button on the input panel of subscriber terminal 20 to set the predetermined time period, or the predetermined time period can be determined by the selection in multiple preset optional values provided by subscriber terminal 20,

Preferably, after step S10, QISD 10 does the following judgment in step S11: whether the number of subscriber terminals in front of subscriber terminal 20 in the call-waiting queue 120 is less than a first predetermined threshold. Generally, the first predetermined threshold is set artificially and is presumed as 15.

It is presumed that the status of queue 120 is still the status shown in Table 2 when step S11 is performed for the first time, i.e., subscriber terminal 20 is still at position 98, and then step S11 will get a negative judgment result. Therefore, the method goes in step S12' in which QISD 10 obtains, according to a second preset rule, the information in relation to the position of subscriber terminal 20 in the call-waiting queue and provides it to subscriber terminal 20. Step S12' can be implemented by at least two embodiments, which are described as below:

**Embodiment 1**

In this case, when step S11 gets a negative judgment result ( the number of subscriber terminals in front of subscriber terminal 20 in the call-waiting queue is larger than or equal to the first predetermined threshold), step S11 will be repeated until any one or more of the following conditions are satisfied:

Condition 1: The number of subscriber terminals in front of subscriber terminal 20 in the call-waiting queue is less than the first predetermined threshold;
Condition 2: A new queue position information request message is received from subscriber terminal 20;

Condition 3: Subscriber terminal 20 has left the call-waiting queue.

It is presumed that condition 2 is satisfied when repeating step S11, which means that subscriber terminal 20 triggers another round of initiative query of position related information according to the basic idea of the present invention. Hence, as stated above, the method goes into step S10, and it will not be elaborated here.

It is presumed that condition 3 is satisfied when repeating step S11, which means that subscriber terminal 20 has hung off and is no longer in the call-waiting queue 120, and then there is no need for QISD 10 to provide it with position related information.

It is presumed that condition 1 is satisfied when repeating step S11, which means that many subscriber terminals in front of subscriber terminal 20 have got answered or hung off, and the status of queue 120 and 114 is shown in Table 3:

Table 3: status of the queue when subscriber terminal 20 is at the forefront of the queue

| Call-waiting queue 120 | |
| --- | --- |
| ID of subscriber terminals | position |
| ... | ... |
| ... | 11 |
| 24120000 | 12 |
| 98760000 | 13 |
| Call-waiting queue 114 | |
| ID of subscriber terminals | position |
| ... | ... |
| ... | ... |
| 43210000 | 9 |

After step S11, QISD 10 determines that the number of subscriber terminals (which is 11) in front of subscriber terminal 20 is less than 15 finally, hence, step S12 is triggered.

Till now, subscriber terminal 20 gets a position which is near the head of call-waiting queue 120, and preferably, the present invention obtains and provides information in relation to its position according to the first preset rule, which will be described in detail later. Before that, another embodiment of step S12' will be described after a negative judgment result is got in step S11:

**Embodiment 2**

QISD 10 monitors the change of the position of subscriber terminal 20 in queue 120. More specifically, since subscriber terminal 20 joins queue 120, or since step S11 is performed and it is known that the number of subscriber terminals in front of subscriber terminal 20 is larger than or equal to the first predetermined threshold, QISD 10 obtains the information in relation to the position of subscriber terminal 20 in the call-waiting queue and provides the obtained information to subscriber terminal 20 at every time when the change of the position of subscriber terminal 20 has reach to a second predetermined threshold. Without loss of generality, it is presumed that the second predetermined threshold is 10 and it is manually preset.

Then, when step S12' is performed in this circumstance, from the status shown in Table 2 (subscriber terminal 20 is at position 98), once the change of the position of subscriber terminal 20 has reached to 10, QISD 10 obtains information in relation to the position of subscriber terminal 20 and sends it to subscriber terminal 20. That's to say, subscriber terminal 20 can know its exact position in the queue when the position of subscriber terminal 20 changes to 88, 78, 68, 58, 48, 38, 28, 18.

Preferably, when S12' is performed according to embodiment 2, step S11 is repeated periodically. Once the number of subscriber terminals in front of subscriber terminal 20 becomes less than the first predetermined threshold, QISD 10 will turn to step S12 to obtain the position information and provide the position information to the subscriber terminal 20 according to the first preset rule.

What described above are the scenarios in which the number of subscriber terminals in front of subscriber terminal 20 is larger than or equal to the first predetermined threshold. In the following text, the scenarios in which the number of subscriber terminals in front of subscriber terminal 20 in call-waiting queue 120 is less than the first predetermined threshold will be described below. The judgment result described above may be got when step S11 is run for the first time after subscriber terminal 20 joins queue 120, or, when step S11 is repeated during the execution process of step S12'. In a word, the method goes into step S12 when it is learned that the number of subscriber terminals in front of subscriber terminal 20 is less than the first predetermined threshold. In step S12, QISD 10 obtains the information in relation to the updated position of subscriber terminal 20 in call-waiting queue 120 and provides the obtained information to subscriber terminal 20 according the first preset rule.

According to an example of the present invention, the first preset rule is: periodically obtaining the information in relation to the updated position of subscriber terminal 20 and providing it to subscriber terminal 20.

To be more specific, QISD 10 judges whether a predetermined time period has passed since the last time that it provides the information in relation to the position of subscriber terminal 20 in the call-waiting queue to subscriber terminal 20. If the predetermined time period has passed since the last time of providing the information in relation to the position of the subscriber terminal in the call-waiting queue to the subscriber terminal, QISD 10 will obtain the information in relation to the updated position of subscriber terminal 20 in call-waiting queue 120 and provides the obtained information to subscriber terminal 20.

In practice, step S11 can be performed immediately after step S10 is completed. If the position of subscriber terminal 20 satisfies the condition set in step S11, QISD 10 repeats judging whether the predetermined time period has passed after step S10 is completed. If one judgment result shows that the predetermined time period has passed after step S10 is completed, QISD 10 will obtain the information of the updated position of subscriber terminal 20 and provide the obtained information to subscriber terminal 20.

Alternatively, step S11 can be performed automatically when step S10 has been completed for a time period (e.g. 20 seconds). If the position of subscriber terminal 20 satisfies the preset condition in step S11, it should be judged whether the predetermined time period has passed after step S10 is completed. The judgment result depends on the relationship between the duration of the predetermined time period and the interval between step S10 and step S11 (such as the aforesaid 20 seconds).

According to another example of the present invention, the first preset rule is to obtain the information in relation to its updated position and provide the information to subscriber terminal 20, when the position of subscriber terminal 20 in the queue changes.

There are some differences between this example and the aforesaid solution in which the information in relation to the position is obtained and provided periodically. When the position related information is obtained periodically, if there is no subscriber terminal hanging off or getting answered in a period, it means that the information provided to subscriber terminal 20 at two consecutive times will be the same. However, information provided at different times will be always different in this example.

In this example, QISD 10 scans the pre-stored information denoting the status of queues which is similar to the information shown in Table 3 periodically, and checks whether the position of subscriber terminal 20 has changed. If one or more subscriber terminals in front of subscriber terminal 20 has left queue 120 before the start of this time of scanning and after the end of last time of scanning, QISD 10 will inform subscriber terminal 20 about its updated position.

In the aforesaid text, the information in relation to the position of subscriber terminal 20 in the queue which is provided by QISD 10 are all in the form of particular numbers, such as "113", "98" and "12" etc. Subscriber terminal 20 informs the position indicated by the numbers to the subscriber using subscriber terminal 20.

Alternatively, after obtaining a number, such as "113", which presents a particular position, QISD 10 further estimates the approximate time for which the subscriber terminal on the particular position shall wait from this moment to the time that it gets answered. For example, presuming P% of the subscriber terminals in the queue will hang off during the waiting process, the time from getting answered to hanging off is T in average for every subscriber terminal, and there are N subscriber terminals in front of subscriber terminal 20 in the queue. Hence, the approximate time for which subscriber terminal 20 needs to wait can be got via the following equation:

$$Waiting\ time = N \times (1 - P\%) \times T$$

After getting the approximate time for which subscriber terminal 20 needs to wait, preferably, QISD 10 provides both the approximate time for which subscriber terminal 20 needs to wait and the position of subscriber terminal 20 in the call-waiting queue to subscriber terminal 20. After that, subscriber terminal 20 informs all the aforesaid information to the subscriber using subscriber terminal 20 by means of voice or display screen.

Those skilled in this art understand, according to another variation of the present invention, steps S11 and S12 can be omitted. Then, after step S10, QISD 10 will not provide information in relation to the updated position of subscriber terminal 20 to subscriber terminal 20 initiatively, unless subscriber terminal 20 sends the queue position information request message.

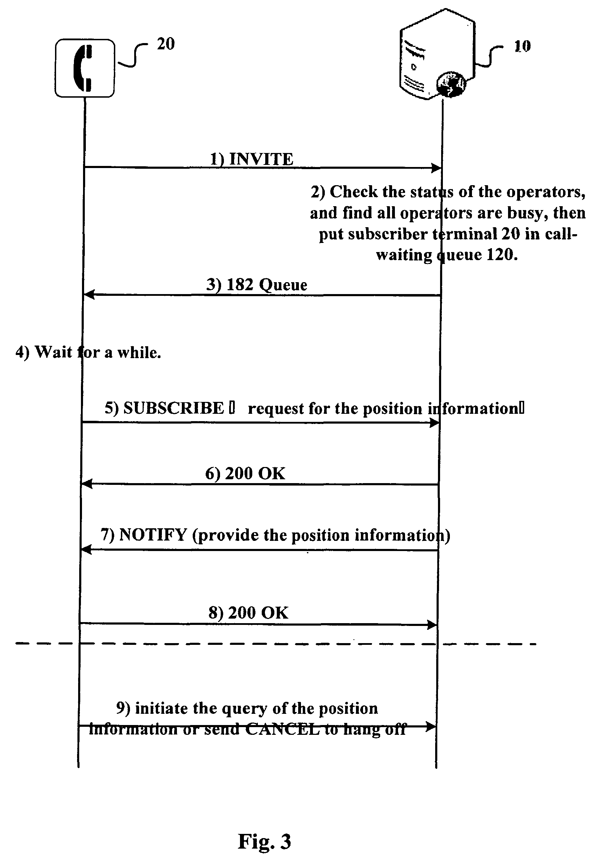

Hereunder, the application of the present invention in an IP communication network based on SIP will be described with reference to Fig. 3 and in conjunction with Fig. 1.

Fig.3 shows a flow chart of a system method, in an IP network based on SIP, for providing information to a subscriber terminal in a call-waiting queue, according to an embodiment of the present invention. QSID 10 is an SIP application server, hereinafter; it is referred to as server 10 for short. Based on the example that subscriber terminal 20 dials hotline 120 based on SIP, the steps shown in Fig. 3 are described as below:

1) Subscriber terminal 20 sends INVITE message to server 10, the message comprises the ID information "120" of operator group a and the ID information "24120000" of subscriber terminal 20 itself;

2) Server 10 finds that all operators in group a is busy, then, it puts subscriber terminal 20 in call-waiting queue 120;

3) Server 10 sends 182 Queue message to subscriber terminal 20, to inform subscriber terminal 20 that it has been put in call-waiting queue 120, preferably, the position of subscriber terminal 20 in queue 120 is carried by 182 Queue message;

4) Subscriber terminal 20 waits for a time period;

5) Subscriber terminal 20 sends SUBSCRIBER TERMINAL message to server 10 which comprises a new "event package" named as "Query_Queue_Position" to request for the information in relation to its position, more specifically, "Query_Queue_Position" comprises the ID information of subscriber terminal 20 and the ID information of the call-waiting queue which is to be queried so that server 10 can obtain the information in relation to the position of subscriber terminal 20 on the basis of the ID information of subscriber terminal 20 and the ID information of the call-waiting queue which is to be queried;

6) Server 10 sends 200 OK message to subscriber terminal 20 to indicate that the request has been accepted by subscriber terminal 20;

7) Server 10 sends NOTIFY to subscriber terminal 20 which comprises the information in relation to the position of subscriber terminal 20 in call-waiting queue 120, specifically, the information is carried by a new "event package" named as "Queue Position" ;

8) Subscriber terminal 20 sends 200 OK message to server 10 to indicate that the NOTIFY message has been received ;

9) After getting the position information, subscriber terminal 20 can choose to keep waiting, or resend the SUBSCRIBE message to request the information in relation to its updated position, or hang off and dial later.

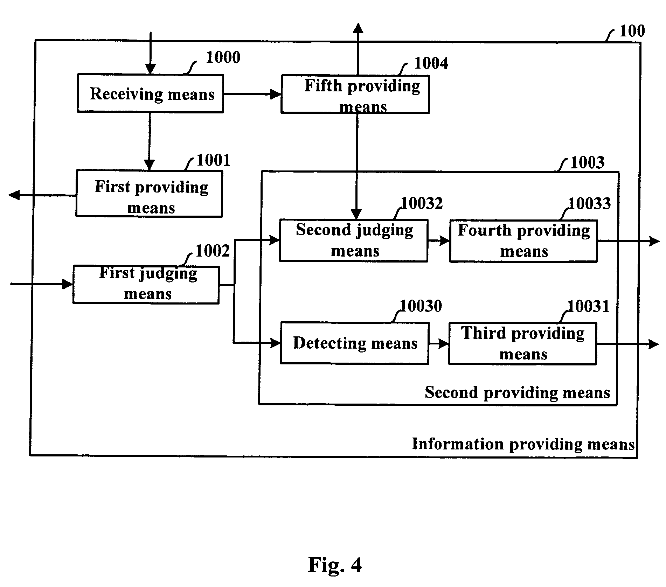

The present invention will be described with reference to block diagrams of means and in conjunction with Fig.1 hereinafter. Fig.4 shows a block diagram of the information providing means, in QISD of a communication network, for providing information to a subscriber terminal in a call-waiting queue according to an embodiment of the present invention.

The information providing means 100 is typically set in the queue information serving device 10 shown in Fig. 1, and it comprises a receiving means 1000, a first providing means 1001, a first judging means 1002, a second providing means 1003 and a fifth providing means 1004. The second providing means 1003 further comprises: a detecting means 10030, a third providing means 10031, a second judging means 10032 and a fourth providing means 10033.

Take the dialing of hotline "120" by subscriber terminal 20 as example, the means shown in Fig.4 is described as below:

The subscriber at subscriber terminal 20 picks up the phone, and dials "120" which is the hotline for First Aid. Therefore, based on the existing techniques, subscriber terminal 20 will generate a message and send it to QISD 10 (for the aim of simplicity, the means for generating the message is not shown in Fig.4). The message comprises such indicating information for indicating the operator group with which the subscriber terminal 20 wants to establish a connection. In this example, the message can carry information "120" at a particular position thereof.

When the message arrives at QISD 10, QISD 10 will parse the aforesaid information "120" out and check the status of every operator in operator group a corresponding to "120" in the pre-stored operator status information. If there is at least one idle operator, QISD 10 will control to establish a connection between subscriber terminal 20 and the idle operator, and set the status corresponding to the operator as "Busy" in the pre-stored operator status information.

If every operator is busy and there is no idle operator in operator group a, QISD 10 will put subscriber terminal 20 into a call-waiting queue corresponding to "120". Preferably, after putting subscriber terminal 20 into the call-waiting queue, QISD 10 informs the current position of subscriber terminal 20 in the queue which is presumed as position 113 to subscriber terminal 20. In QISD 10, the call-waiting queues corresponding to each operator group can be maintained as a list and the list comprises the ID information of every operator group (such as the hotline number "120" corresponding to operator group a), and the ID information of all subscriber terminals in each queue (such as their corresponding logical numbers). As shown in Table 1, the call-waiting queues are identified with the number of their corresponding hotlines. The ID information (logical number) of subscriber terminal 20 is presumed as 24120000, subscriber terminal 21,22 shown in Fig. 1 are also in the call-waiting queue and are located at the first and second position respectively. Their logical numbers are 54740000 and 26430000 respectively.

Those skilled in this art understand that the items in table 1 will change when some particular events happen, e.g., a new subscriber terminal joins the queue, some subscriber terminals in the queue get answered by operators or some subscriber terminals hang off and quit the queue.

After that, subscriber terminal 20 stays in the queue and does not hang off. A while later (such as one minute later), the subscriber at subscriber terminal 20 triggers the query of position related information initiatively to know its current position. The receiving means 100 is responsible for receiving the queue position information request message from subscriber terminal 20 and provide the message to the first providing means 1001. The latter will obtain the information in relation to the position of subscriber terminal 20 according to the ID information of subscriber terminal 20 and the ID information of the call-waiting queue which is carried by the message and provide the information in relation to the position to subscriber terminal 20. According to the aforesaid description, those skilled in this art understand that a time period has passed since subscriber terminal 20 joins the queue. The items in Table 1 may change and it is presumed that they are updated as shown in Table 2.

By comparing Table 1 with Table 2, it can be seen that 15 subscriber terminals in the 112 subscriber terminals which were in front of subscriber terminal 20 have left the queue. The current position of subscriber terminal 20 is position 98, and a subscriber terminal with logical number "98760000" has dialed "120" after subscriber terminal 20 and is put in call-waiting queue 120.

For call-waiting queue 114, it can be found that the subscriber terminal numbered "12340000" at the first position of the queue has got answered by an operator and quit the queue and there is no new subscriber terminal which dials in.

According to "24120000" and "120" in the queue position information request message sent by subscriber terminal 20, the first providing means conducts a search in Table 2, and determines that the current position of subscriber terminal 20 in queue "120" is 98. Then, a queue information notification message comprising the position information is generated and sent to subscriber terminal 20.

In this way, subscriber terminal 20 gets its position in call-waiting queue "120" by initiatively inquiring.

Preferable, the first judging means 1002 and the second providing means 1003 in the information providing means 100 are adapted for performing the following operations. The first judging means 1002 judges whether the number of subscriber terminals in front of subscriber terminal 20 in call-waiting queue 120 is less than a first predetermined threshold. Generally, the first predetermined threshold is set artificially and it is presumed as 15.

Presuming that the status of queue 120 is still the status shown in Table 2 when the judging operation is performed for the first time, i.e. subscriber terminal 20 is still at position 98, and then the first judging means 1002 will get a negative judgment result (the number of subscriber terminals in front of subscriber terminal 20 in the call-waiting queue 120 is larger than or equal to the first predetermined threshold). According to the negative judgment result, the subsequent operations of the information providing means 100 has at least two embodiments which are described as below::

**Embodiment 1**

The first judging means 1002 repeats the aforesaid judging operation till any one or more of the following condition is satisfied:

    Condition 1: The number of subscriber terminals in front of subscriber terminal 20 in the call-waiting queue is less than the first predetermined threshold;
    Condition 2: A new queue position information request message is received from subscriber terminal 20;
    Condition 3: Subscriber terminal 20 has left the call-waiting queue.

To monitor condition 2, the second judging means 1002 keeps watching the operation of the receiving means 1000. E.g., after receiving the queue position information request message from subscriber terminal 20 again, the receiving means 1000 will inform the information to the second judging means. Once condition 2 is satisfied, which means subscriber terminal 20 triggers another round of initiative query of position related information according to the basic idea of the present invention, the first providing means 1001 will provide subscriber terminal 20 with information in relation to its updated position, and it will not be elaborated here.

It is presumed that when repeating the judging operation, the first judging means 1002 judges that condition 3 is satisfied, which means subscriber terminal 20 has hung off and is no longer in call-waiting queue 120, and there is no need for QISD 10 to provide it with any position information.

It is presumed that when repeating the judging operation, the first judging means 1002 judges that condition 1 is satisfied, which means many subscriber terminals in front of subscriber terminal 20 have got answered or hung off, and the status of queue 120 an 114 is shown in Table 3. Hence, the first judging means 1002 determines that the number of subscriber terminals (which is 11) in front of subscriber terminal 20 in the call-waiting queue is less than 15, and then triggers the second providing means 1003 to work.

Then, according to a first preset rule, the second providing means 1003 will obtain information in relation to the updated position of subscriber terminal 20 in call-waiting queue 120 and provide it to subscriber terminal 20. The working way of the second providing means 1003 will be described later in detail, and the second embodiment when the first judging means 1002 gets a negative result is described as below:

**Embodiment 2**

The fifth providing means 1004 monitors the change of the position of subscriber terminal 20 in queue 120. Specifically, since the subscriber terminal joins queue 120, or since the first judging means 1002 knows that the number of subscriber terminals in front of subscriber terminal 20 is larger than or equal to the first predetermined threshold, the information in relation to the position of subscriber terminal 20 in the call-waiting queue is obtained and the obtained information is provided to subscriber terminal 20 at every time when the change of the position of subscriber terminal 20 has reach to a second predetermined threshold. Without loss of generality, it is presumed that the second predetermined threshold is 10 and it is manually preset.

Then, when the information in relation to the position of subscriber terminal 20 is processed in this way, from the status shown in Table 2 (subscriber terminal 20 is at position 98), once the change of the position of subscriber terminal 20 has reached to 10, the fifth providing means 1004 obtains the information in relation to the position of subscriber terminal 20 and sends it to subscriber terminal 20. That's to say, when the position of subscriber terminal 20 changes to 88, 78, 68, 58, 48, 38, 28, 18, subscriber terminal 20 can know its exact position in the queue.

Preferably, according to embodiment 2, the first judging means 1002 repeats the corresponding judging operation periodically. Once the number of subscriber terminals in front of subscriber terminal 20 becomes less than the first predetermined threshold, the first judging means 1002 will inform the judgment result to the second providing means 1003 to obtain and provide position information to subscriber terminal 20 according to the first preset rule.

What described above are the scenarios in which the number of subscriber terminals in front of subscriber terminal 20 is larger than or equal to the first predetermined threshold. In the following text, the scenarios in which the number of subscriber terminals in front of subscriber terminal 20 in call-waiting queue 120 is less than the first predetermined threshold will be described below. The aforesaid judgment result may be got in the first time of judging by the first judging means 1002 after subscriber terminal 20 joins queue 120, or be got when the first judging means 1002 repeats judging during the operation process of the fifth providing means 1004. In a word, when it is learned that the number of subscriber terminals in front of subscriber terminal 20 is less than the first predetermined threshold, the judgment result will be provided to the second providing means 1003 to obtain the information in relation to the position of subscriber terminal 20 and provide the obtained information to subscriber terminal 20 according to the first preset rule.

According to an example of the present invention, the second judging means 10032 and fourth providing means 10033 in the second providing means 1003 obtain the information in relation to the updated position of subscriber terminal 20 and inform it to subscriber terminal 20 periodically.

To be more specific, the second judging means 10032 judges whether a predetermined time period has passed since the last time that the information in relation to the position of subscriber terminal 20 in the call-waiting queue is provided to subscriber terminal 20. If a predetermined time period has passed since the last time of providing the information in relation to the position of the subscriber terminal in the call-waiting queue to the subscriber terminal, the information in relation to the updated position of subscriber terminal 20 in queue 120 is obtained and the obtained information is provided to subscriber terminal 20.

In practice, the first judging means 1002 can judge whether the number of subscriber terminals in front of subscriber terminal 20 is less than the first predetermined threshold immediately after the first providing means 1001 provides the information in relation to the position to subscriber terminal 20. If the judgment result is "Yes", the second judging means 10032 repeats judging whether the predetermined time period has passed after the first providing means 1001 provides the information in relation to the position to subscriber terminal 20. If one judgment result shows that the predetermined time period has passed after the first providing means 1001 provides the information in relation to the position, then the fourth providing means 10033 will obtain the information of the updated position of subscriber terminal 20 and provide it to subscriber terminal 20.

Alternatively, the first judging means 1002 can run automatically when the first providing means 1001 has provided the information in relation to the position to subscriber terminal 20 for a time period (e.g. 20 seconds). If the position of subscriber terminal 20 satisfies the condition set by the first judging means 1002, the second judging means 10032 judges whether the predetermined time period has passed after the first providing means 1001 has provided the information in relation to the position to subscriber terminal 20. The judgment result depends on the relationship between the duration of the predetermined time period and the interval (such as the aforesaid 20 seconds) between the time point when the first judging means 1002 does the judgment and the time point when the first providing means 1001 provides the information in relation to the position to subscriber terminal 20 .

According to another example of the present invention, when the position of subscriber terminal 20 in the queue has changed, the detecting means 10030 and the third providing means 10031 in the second providing means 1003 obtain the information in relation to its updated position and provide the information to subscriber terminal 20.

There are some differences between this example and the aforesaid solution in which the information in relation to the position is obtained and provided periodically. When the position related information is obtained periodically, if there is no subscriber terminal hanging off or getting answered in a period, the information provided to subscriber terminal 20 at two consecutive times will be the same. However, information provided at different times will be always different in this example.

In this example, the detecting means 10030 scans the pre-stored information denoting the status of queues which is similar to the information shown in Table 3 periodically, and checks whether the position of subscriber terminal 20 has changed. If one or more subscriber terminals in front of subscriber terminal 20 left the queue before the start of this time of scanning and after the end of last time of scanning, the third providing means 10031 will inform subscriber terminal 20 of its updated position.

In the aforesaid text, the information in relation to the position of subscriber terminal 20 in the queue provided by QISD 10 are all in the form of particular numbers, such as "113", "98" and "12" etc. According to a variation of the above examples, after obtaining a number, such as "113", which presents a particular position, QISD 10 further estimates the approximate time for which the subscriber terminal on the particular position shall wait from this moment to the time that it gets answered. For example, presuming P% of the subscriber terminals in the queue will hang off during the waiting process, the time from getting answered to hanging off for every subscriber terminal is T in average, and there are N subscriber terminals in front of subscriber terminal 20 in the queue. Hence, the approximate time for which subscriber terminal 20 needs to wait can be got via the following equation:

$$Waiting\ time = N \times (1 - P\%) \times T$$

After getting the approximate time for which subscriber terminal 20 needs to wait, preferably, QISD 10 provides both the approximate time for which subscriber terminal 20 needs to wait and the position of subscriber terminal 20 in the call-waiting queue to subscriber terminal 20. After that, subscriber terminal 20 informs all the aforesaid information to the subscriber using subscriber terminal 20 by means of voice or display screen.

Those skilled in this art understand, according to another variation, the first judging means 1002 and the second providing means 1003 can be omitted. Then, QISD 10 will not provide information in relation to the updated position of subscriber terminal 20 to subscriber terminal 20 initiatively, unless subscriber terminal 20 sends the queue position information request message.

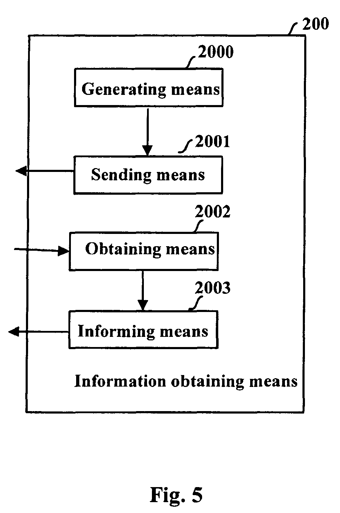

In the following text, the information obtaining means, in a subscriber terminal of a communication network, for obtaining information will be described with reference to Fig.5 and in conjunction with Fig.1. The information obtaining means 200 comprises a generating means 2000, a sending means 2001, an obtaining means 2002 and an informing means 2003. Take the dialing of "120" by subscriber terminal 20 as example.

The subscriber at the subscriber terminal 20 picks up the phone and dials "120" which is the hotline for First Aid. Then, based on the existing techniques, subscriber terminal 20 will generate a message and send it to QISD 10. The message comprises such indicating information for indicating the operator group with which the subscriber terminal 20 wants to establish a connection. In this example, the message can carry information "120" at a particular position thereof.

When the message arrives at QISD 10, QISD 10 will parse the aforesaid information "120" out and check, in pre-stored status information, the status of every operator in operator group a corresponding to "120". If there is at least one idle operator, QISD 10 will control to establish a connection between subscriber terminal 20 and the idle operator, and change the status corresponding to the operator in the pre-stored operator status information into "Busy".

If every operator is busy and there is no idle operator in operator group a, QISD 10 will put subscriber terminal 20 in a call-waiting queue corresponding to "120". Preferably, after putting the subscriber terminal 20 in the call-waiting queue, QISD 10 informs the current position of subscriber terminal 20 in the call-waiting queue which is presumed as position 113 to subscriber terminal 20.

After that, subscriber terminal 20 stays in the queue and does not hang off. A while later (such as one minute later), the subscriber at subscriber terminal 20 triggers the query of position related information initiatively to know its current position. Hence, the subscriber presses a particular button (e.g. "#") on the input panel of subscriber terminal 20 or chooses according to a menu provided by the subscriber terminal 20 to trigger the query. If it is detected that the subscriber has pressed the particular button or selected the corresponding menu item in the menu, the generating means 2000 generates a queue position information request message. If a subscriber terminal can only show up in one call-waiting queue at one time point, the generated message shall only carry the ID information of subscriber terminal 20. If a subscriber terminal can show up in multiple call-waiting queues at the same time, the queue position information request message can be generated in the following ways: 1) At first, subscriber terminal 20 shifts to the call-waiting queue to be queried, and then performs the query. In this scenario, the ID information "120" needs not to be carried in the queue position information request message generated by the generating means 2000; 2) subscriber terminal 20 provides a shortcut for the subscriber to query the positions of subscriber terminal 20 in all call-waiting queues at one time. For example, The subscriber presses a particular button such as "*" on the phone or selects a menu item on the menu provided by subscriber terminal 20, the generating means 2000 will generate queue position information request messages for all of the queues in which subscriber terminal 20 is put respectively, and send the generated messages to QISD 10. In this case, it is necessary for each queue information request message generated by the generating means 2000 to carry the ID information of the corresponding call-waiting queue to help QISD 10 to know which queue is the queue that the received queue information request message is in relation to among the queues that subscriber terminal 20 is in. Hereunder, it is presumed that a queue position information request message always carries the ID information of the subscriber terminal and the ID information of the queue in which the subscriber terminal is located.

Then, the generated queue position information request message will be provided to the sending means 2001 and then sent to QISD 10 by the sending means 2001.

After that, QISD 10 will provide the information in relation to the position to the subscriber terminal according to some simple or complex rules. E.g., under SIP, making use of NOTIFY message to inform the information in relation to the position. Hence, the obtaining means 2002 is responsible for receiving the NOTIFY message and parsing the information therein, such as the information "98" indicating that subscriber terminal 20 is at position 98 of the queue.

After that, the informing means 2003 informs the information in relation to the position of subscriber terminal 20 in call-waiting queue 120 obtained by the obtaining means 2002 to the subscriber using subscriber terminal 20 in the form comprising, but not limited to, voice or display screen.

The embodiments of the present invention have been described above, and it is to be understood that the present invention is not limited to specific system, apparatus and detailed protocols. Various modifications or alternations may be made by those skilled in the art within the scope as defined in the appended claims.

**Claims**

1. A method, in a queue information serving device (10) in a communication network, of providing information in relation to a position of a subscriber terminal (20) in a call-waiting queue to the subscriber terminal (20) in the call-waiting queue, comprising the steps of:

    a. receiving a queue position information request message from the subscriber terminal (20), the queue position information request message being for requesting the queue information serving device (10) to provide the information in relation to the position of the subscriber terminal (20) in the call-waiting queue to the subscriber terminal (20);
    b. obtaining the information in relation to the position of the subscriber terminal (20) in the call-waiting queue and providing the information in relation to the position of the subscriber terminal (20) to the subscriber terminal (20),

    **characterized by** the steps of:

    c. judging whether the number of subscriber terminals in front of the subscriber terminal (20) in the call-waiting queue is less than a first predetermined threshold;
    d. if the number of subscriber terminals in front of the subscriber terminal (20) in the call-waiting queue is less than the first predetermined threshold, according to a first preset rule, obtaining information in relation to an updated position of the subscriber terminal (20) in the call-waiting queue and providing the information in relation to the updated position of the subscriber terminal (20) to the subscriber terminal (20).

2. The method according to claim 1, **characterized in that**, step d comprises steps of:

    d1. if the number of the subscriber terminals in front of the subscriber terminal (20) in the call-waiting queue is less than the first predetermined threshold, detecting whether one or more subscriber terminals of each subscriber terminal in front of the subscriber terminal (20) have left the call-waiting queue;
    d2. when one or more subscriber terminals of each subscriber terminal (20) in front of the subscriber terminal (20) have left the call-waiting queue, obtaining the information in relation to the updated position of the subscriber terminal (20) in the call-waiting queue and providing the updated position of the subscriber terminal (20) to the subscriber terminal (20).

3. The method according to claim 1 or 2, **characterized in that**, step d further comprises steps of:

    - judging whether a predetermined time period has passed since last time of providing the information in relation to the position of the subscriber terminal (20) in the call-waiting queue to the subscriber terminal;
    - if the predetermined time period has passed since the last time of providing the information in relation to the position of the subscriber terminal (20) in the call-waiting queue to the subscriber terminal, obtaining the information in relation to the updated position of the subscriber terminal (20) in the call-waiting queue and providing the information in relation to the updated position of the subscriber terminal (20) to the subscriber terminal (20).

4. The method according to any one of claims 1-3, further comprising:

    d'. if the number of subscriber terminals in front of the subscriber terminal (20) in the call-waiting queue is not less than the first predetermined threshold, according to a second preset rule, obtaining the information in relation to the updated position of the subscriber terminal (20) in the call-waiting queue and providing the information in relation to the updated position of the subscriber terminal (20) to the subscriber terminal (20).

5. The method according to claim 4, **characterized in that**, step d' comprises steps of:

    d' 1. if the number of subscriber terminals in front of the subscriber terminal (20) in the call-waiting queue is not less than the first predetermined threshold, obtaining the information in relation to the updated position of the subscriber terminal (20) in the call-waiting queue and providing the information in relation to the updated position of the subscriber terminal (20) to the subscriber terminal (20) at every time when a change of the position of the subscriber terminal (20) in the call-waiting queue has reached to a second predetermined threshold;

d'2. repeating step d'1 until the number of the subscriber terminals in front of the subscriber terminal (20) in the call-waiting queue is less than the first predetermined threshold.

6. The method according to claim 4, **characterized in that**, step d' comprises:

repeating step c until at least one of the following conditions is satisfied:

- the number of the subscriber terminals in front of the subscriber terminal (20) in the call-waiting queue is less than the first predetermined threshold;
- a new queue position information request message is received from the subscriber terminal (20);
- the subscriber terminal (20) has left the call-waiting queue.

7. The method according to any one of claims 1-6, **characterized in that**, the information in relation to the position of the subscriber terminal (20) in the call-waiting queue comprises at least one of the followings:

- the position of the subscriber terminal (20) in the call-waiting queue;
- the length of time for which the subscriber terminal (20) needs to wait in the call-waiting queue.

8. The method according to any one of claims 1-7, **characterized in that**, the communication network comprises at least one of the followings:

- IP communication network;
- PSTN communication network.

9. An information providing means, in a queue information serving device (10), for providing information in relation to a position of a subscriber terminal (20) in a call-waiting queue to the subscriber terminal (20) in the call-waiting queue, comprising:

a receiving means for receiving queue position information request message from the subscriber terminal (20), the queue position information request message being for requesting the queue information serving device (10) to provide the information in relation to the position of the subscriber terminal (20) in the call-waiting queue to the subscriber terminal (20);

a first providing means for obtaining the information in relation to the position of the subscriber terminal (20) in the call-waiting queue and providing the information in relation to the position of the subscriber terminal (20) to the subscriber terminal (20),

**characterized by**:

a first judging means for judging whether the number of subscriber terminals in front of the subscriber terminal (20) in the call-waiting queue is less than a first predetermined threshold;

a second providing means for, according to a first preset rule, obtaining the information in relation to an updated position of the subscriber terminal (20) in the call-waiting queue and providing the information in relation to the updated position of the subscriber terminal (20) to the subscriber terminal (20), if the number of subscriber terminals in front of the subscriber terminal (20) in the call-waiting queue is less than the first predetermined threshold.

10. The information providing means according to claim 9, **characterized in that**, the second providing means comprises:

a detecting means for, if the number of the subscriber terminals in front of the subscriber terminal (20) in the call-waiting queue is less than the first predetermined threshold, detecting whether one or more subscriber terminals of each subscriber terminal (20) in front of the subscriber terminal (20) have left the call-waiting queue;

a third providing means for, when one or more subscriber terminals of each subscriber terminal (20) in front of the subscriber terminal (20) have left the call-waiting queue, obtaining the information in relation to the updated position of the subscriber terminal (20) in the call-waiting queue and providing the updated position of the subscriber terminal (20) to the subscriber terminal (20).

11. The information providing means according to claim 10, **characterized in that**, the second providing means further comprises:

a second judging means for judging whether a predetermined time period has passed since last time of providing the information in relation to the position of the subscriber terminal (20) in the call-waiting queue to the subscriber terminal (20);

a fourth providing means for, if the predetermined time period has passed since the last time of providing the information in relation to the position of the subscriber terminal (20) in the call-waiting queue to the subscriber terminal (20), obtaining the information in relation to the updated position of the subscriber terminal (20) in the call-waiting queue and providing the information in relation to the updated position of the subscriber terminal (20) to the subscriber terminal (20).

12. The information providing means according to anyone of claims 11, further comprising:

a fifth providing means for, if the number of subscriber terminals in front of the subscriber terminal (20) in the call-waiting queue is not less than the first predetermined threshold, according to a second preset rule, obtaining the information in relation to the updated position of the subscriber terminal (20) in the call-waiting queue and providing the information in relation to the updated position of the subscriber terminal (20) to the subscriber terminal (20).

13. The information providing means according to claim 12, **characterized in that**, the fifth providing means is further adapted for:

- if the number of subscriber terminals in front of the subscriber terminal (20) in the call-waiting queue is not less than the first predetermined threshold, obtaining the information in relation to the updated position of the subscriber terminal (20) in the call-waiting queue and providing the information in relation to the updated position of the subscriber terminal (20) to the subscriber terminal (20) at every time when a change of the position of the subscriber terminal (20) in the call-waiting queue has reached to a second predetermined threshold;
- repeating the afore-cited operation until the number of the subscriber terminals in front of the subscriber terminal (20) in the call-waiting queue is less than the first predetermined threshold.

14. The information providing means according to claim 12, **characterized in that**, the fifth providing means is further adapted for:

if the number of the subscriber terminals in front of the subscriber terminal (20) in the call-waiting queue is not less than the first predetermined threshold, controlling the first judging means to repeat judging whether the number of subscriber terminals in front of the subscriber terminal (20) in the call-waiting queue is less than the first predetermined threshold until at least one of the following conditions is satisfied:

- the number of the subscriber terminals in front of the subscriber terminal (20) in the call-waiting queue is less than the first predetermined threshold;
- a new queue position information request message is received from the subscriber terminal;
- the subscriber terminal (20) has left the call-waiting queue.

15. The information providing means according to any one of claims 9-14, **characterized in that**, the information in relation to the position of the subscriber terminal (20) in the call-waiting queue comprises at least one of the followings:

- the position of the subscriber terminal (20) in the call-waiting queue;
- the length of time for which the subscriber terminal (20) needs to wait in the call-waiting queue.

16. The information providing means according to any one of claims 9-15, **characterized in that**, the communication network comprises at least one of the followings:

- IP communication network;
- PSTN communication network.

17. A queue information serving device (10), comprising an information providing means for proving information in relation to a position of a subscriber terminal (20) in a call-waiting queue to the subscriber terminal (20) in the call-waiting queue according to any one of claims 9-16.

**Patentansprüche**

1. Verfahren in einer Vorrichtung zur Lieferung von Warieschlangeninformationen (10) in einem Kommunikationsnetzwerk zur Bereitstellung von Informationen bezüglich einer Position eines Teilnehmerendgeräts (20) in einer Anrufwarteschlange zum Teilnehmerendgerät (20), die folgenden Schritte umfassend:

a. den Empfang einer Anforderungsnachricht nach Informationen zur Warteschlangenposition von einem Teilnehmerendgerät (20), wobei die Anforderungsnachricht nach Informationen zur Warteschlangenposition dazu dient, bei der Vorrichtung zur Lieferung von Warteschlangeninformationen (10) anzufordern, dem Teilnehmerendgerät (20) die Information bezüglich der Position des Teilnehmerendgeräts (20) in der Anrufwarteschlange bereitzustellen;

b. das Abrufen der Information bezüglich der Position des Teilnehmerendgeräts (20) in der Anrufwarteschlange und das Bereitstellen der Information bezüglich der Position des Teilnehmerendgeräts (20) in der Anrufwarteschlange für das Teilnehmerendgerät (20),

**gekennzeichnet durch** die folgenden Schritte:

c. Beurteilen, ob die Anzahl der Teilnehmerendgeräte vor dem Teilnehmerendgerät (20) in der Anrufwarteschlange unter einem ersten vordefinierten Grenzwert liegt;

d. wenn die Anzahl der Teilnehmerendgeräte vor dem Teilnehmerendgerät (20) in der Anrufwarteschlange unter dem ersten vordefinierten Grenzwert liegt, das gemäß einer ersten voreingestellten Regel erfolgende Abrufen von Informationen bezüglich einer aktualisierten Position des Teilnehmerendgeräts (20) in der Anrufwarteschlange und das Bereitstellen der Information bezüglich der aktualisierten Position des Teilnehmerendgeräts (20) für das Teilnehmerendgerät (20).

2. Das Verfahren nach Anspruch 1, **dadurch gekennzeichnet, dass** Schritt d die folgenden Schritte umfasst:

d1. wenn die Anzahl der Teilnehmerendgeräte vor dem Teilnehmerendgerät (20) in der Anrufwarteschlange unter dem ersten vordefinierten Grenzwert liegt, das Feststellen, ob eines oder mehrere Teilnehmerendgeräte aller Teünehmerendgeräte vor dem Teilnehmerendgerät (20) die Anrufwarteschlange verlassen haben;

d2. wenn eines oder mehrere Teilnehmerendgeräte (20) aller Teilnehmerendgeräte vor dem Teilnehmerendgerät (20) die Anrufwarteschlange verlassen haben, das Einholen der Information bezüglich der aktualisierten Position des Teilnehmerendgerät (20) in der Anrufwarteschlange und das Bereitstellen der aktualisierten Position des Teilnehmerendgeräts (20) für das Teilnehmerendgerät (20).

3. Das Verfahren nach Anspruch 1 oder 2, **dadurch gekennzeichnet, dass** Schritt d weiterhin die folgenden Schritte umfasst:

- das Beurteilen, ob seit dem letztmaligen Bereitstellen der Information bezüglich der Position des Teilnehmerendgeräts (20) in der Anrufwarteschlange an das Teilnehmerendgerät eine vordefinierte Zeitdauer vergangen ist;

- wenn der vordefinierte Zeitraum seit dem letztmaligen Bereitstellen der Information bezüglich der Position des Teilnehmerendgeräts (20) in der Anrufwarteschlange an das Teilnehmerendgerät abgelaufen ist, das Abrufen der Information zur aktualisierten Position des Teilnehmerendgeräts (20) in der Anrufwarteschlange und das Bereitstellen der Information bezüglich der aktualisierten Position des Teilnehmerendgeräts (20) in der Anrufwarteschlange für das Teilnehmerendgerät (20).

4. Das Verfahren nach einem beliebigen der Ansprüche 1 bis 3, weiterhin umfassend:

d'. wenn die Anzahl der Teilnehmerendgeräte vor dem Teilnehmerendgerät (20) in der Anrufwarteschlange nicht unter dem ersten vordefinierten Grenzwert liegt, das gemäß einer zweiten voreingestellten Regel erfolgende Abrufen von Informationen bezüglich der aktualisierten Position des Teilnehmerendgeräts (20) in der Anrufwarteschlange und das Bereitstellen der Information bezüglich der aktualisierten Position des Teilnehmerendgeräts (20) für das Teilnehmerendgerät (20).

5. Das Verfahren nach Anspruch 4, **dadurch gekennzeichnet, dass** Schritt d' die folgenden Schritte umfasst:

d'1. wenn die Anzahl der Teilnehmerendgeräte vor dem Teilnehmerendgerät (20) in der Anrufwarteschlange nicht unter dem ersten vordefinierten Grenzwert liegt, das Abrufen von Informationen bezüglich der aktualisierten Position des Teilnehmerendgeräts (20) in der Anrufwarteschlange und das Bereitstellen der Information bezüglich der aktualisierten Position des Teilnehmerendgeräts (20) für das Teilnehmerendgerät (20) immer dann, wenn eine Änderung der Position des Teilnehmerendgeräts (20) in der Anrufwarteschlange einen zweiten vordefinierten Grenzwert erreicht hat.

d'2. das Wiederholen von Schritt d'1, bis die Anzahl der Teilnehmerendgeräte vor dem Teilnehmerendgerät (20) in der Anrufwarteschlange unter dem ersten vordefinierten Grenzwert liegt.

6. Das Verfahren nach Anspruch 4, **dadurch gekennzeichnet, dass** Schritt d' umfasst:

das Wiederholen von Schritt c, bis mindestens eine der folgenden Bedingungen erfüllt ist:

- die Anzahl der Teilnehmerendgeräte vor dem Teilnehmerendgerät (20) in der Anrufwarteschlange liegt unter dem ersten vordefinierten Grenzwert;

- vom Teilnehmerendgerät (20) wird eine neue Anforderungsnachricht nach Informationen zur Warteschlangenposition empfangen;
- das Teilnehmerendgerät (20) hat die Anrufwarteschlange verlassen.

**7.** Das Verfahren nach einem jeglichen der Ansprüche 1 bis 6, **dadurch gekennzeichnet, dass** die Information zur Position des Teilnehmerendgeräts (20) in der Anrufwarteschlange mindestens eine der folgenden Informationen umfasst:

- die Position des Teilnehmerendgeräts (20) in der Anrufwarteschlange
- die Zeitdauer, die das Teilnehmerendgerät (20) in der Anrufwarteschlange warten muss.

**8.** Das Verfahren nach einem jeglichen der Ansprüche 1 bis 7, **dadurch gekennzeichnet, dass** das Kommunikationsnetzwerk mindestens umfasst:

- ein IP-Kommunikationsnetzwerk; oder
- ein PSTN-Kommunikationsnetzwerk.

**9.** Informationsbereitstellungsmittel in einer Vorrichtung zur Lieferung von Warteschlangeninformationen (10) zur Bereitstellung von Informationen bezüglich einer Position eines Teilnehmerendgeräts (20) in einer Anrufwarteschlange zum Teilnehmerendgerät (20), umfassend:

ein Empfangsmittel für den Empfang einer Anforderungsnachricht nach Informationen zur Warteschlangenposition von einem Teilnehmerendgerät (20), wobei die Anforderungsnachricht nach Informationen zur Warteschlangenposition dazu dient, bei der Vorrichtung zur Lieferung von Warteschlangeninformationen (10) anzufordern, dem Teilnehmerendgerät (20) die Information bezüglich der Position des Teilnehmerendgeräts (20) in der Anrufwarteschlange bereitzustellen;
ein erstes Bereitstellungsmittel für das Abrufen der Information bezüglich der Position des Teilnehmerendgeräts (20) in der Anrufwarteschlange und das Bereitstellen der Information bezüglich der Position des Teilnehmerendgeräts (20) in der Anrufwarteschlange für das Teilnehmerendgerät (20),

**gekennzeichnet durch**:

ein Beurteilungsmittel für das Beurteilen, ob die Anzahl der Teilnehmerendgeräte vor dem Teilnehmerendgerät (20) in der Anrufwarteschlange unter einem ersten vordefinierten Grenzwert liegt;
ein zweites Bereitstellungsmittel, um gemäß einer ersten voreingestellten Regel die Information bezüglich einer aktualisierten Position des Teilnehmerendgeräts (20) in der Anrufwarteschlange abzurufen und die Information bezüglich der aktualisierten Position des Teilnehmerendgeräts (20) in der Anrufwarteschlange dem Teilnehmerendgerät (20) bereitzustellen, wenn die Zahl der Teilnehmerendgeräte vor dem Teilnehmerendgerät (20) in der Anrufwarteschlange unter dem ersten vordefinierten Grenzwert liegt.

**10.** Die Informationsbereitstellungsmittel nach Anspruch 9, wobei die zweiten Bereitstellungsmittel umfassen:

Feststellungsmittel, um dann, wenn die Anzahl der Teilnehmerendgeräte vor dem Teifnehmerendgerät (20) in der Anrufwarteschlange unter dem ersten vordefinierten Grenzwert liegt, festzustellen, ob eines oder mehrere Teilnehmerendgeräte aller Teilnehmerendgeräte (20) vor dem Teilnehmerendgerät (20) die Anrufwarteschlange verlassen haben;
dritte Bereitstellungsmittel, um dann, wenn eines oder mehrere Teilnehmerendgeräte aller Teilnehmerendgeräte (20) vor dem Teilnehmerendgerät (20) die Anrufwarteschlange verlassen haben, die Information bezüglich der aktualisierten Position des Teilnehmerendgerät (20) in der Anrufwarteschlange einzuholen und die aktualisierte Position des Teilnehmerendgeräts (20) dem Teilnehmerendgerät (20) zur bereitzustellen.

**11.** Die Informationsbereitstellungsmittel nach Anspruch 10, wobei die zweiten Bereitstellungsmittel weiterhin umfassen:

zweite Beurteilungsmittel für das Beurteilen, ob seit dem letztmaligen Bereitstellen der Information bezüglich der Position des Teilnehmerendgeräts (20) in der Anrufwarteschlange für das Teilnehmerendgerät (20) eine vordefinierte Zeitdauer vergangen ist;
vierte Bereitstellungsmittel, um dann, wenn der vordefinierte Zeitraum seit dem letztmaligen Bereitstellen der Information bezüglich der Position des Teilnehmerendgeräts (20) in der Anrufwarteschlange für das Teilnehmerendgerät (20) abgelaufen ist, die Information zur aktualisierten Position des Teilnehmerendgeräts (20) in der Anrufwarteschlange abzurufen und dem Teilnehmerendgerät (20) die Information bezüglich der aktualisierten Position des Teilnehmerendgeräts (20) in der Anrufwarteschlange bereitzustellen.

**12.** Die Informationsbereitstellungsmittel nach Anspruch 11, weiterhin umfassend:

ein fünftes Bereitstellungsmittel, um dann, wenn die Anzahl der Teilnehmerendgeräte vor dem Teilnehmerendgerät (20) in der Anrufwarteschlange nicht unter dem ersten vordefinierten Grenzwert liegt, gemäß einer zweiten voreingestellten Regel Informationen bezüglich der aktualisierten Position des Teilnehmerendgeräts (20) in der Anrufwarteschlange abzurufen und die Information bezüglich der aktualisierten Position des Teilnehmerendgeräts (20) dem Teilnehmerendgerät (20) bereitzustellen.

13. Die Informationsbereitstellungsmittel nach Anspruch 12, wobei die fünften Bereitstellungsmittel weiterhin dafür ausgelegt sind, um:

- dann wenn die Anzahl der Teilnehmerendgeräte vor dem Teilnehmerendgerät (20) in der Anrufwarteschlange nicht unter dem ersten vordefinierten Grenzwert liegt, Informationen bezüglich der aktualisierten Position des Teilnehmerendgeräts (20) in der Anrufwarteschlange abzurufen und die Information bezüglich der aktualisierten Position des Teilnehmerendgeräts (20) für das Teilnehmerendgerät (20) immer dann bereitzustellen, wenn eine Änderung der Position des Teilnehmerendgeräts (20) in der Anrufwarteschlange einen zweiten vordefinierten Grenzwert erreicht hat.
- den vorgenannten Schritt so oft zu wiederholen, bis die Anzahl der Teilnehmerendgeräte vor dem Teilnehmerendgerät (20) in der Anrufwarteschlange unter dem ersten vordefinierten Grenzwert liegt.

14. Die Informationsbereitstellungsmittel nach Anspruch 12, **dadurch gekennzeichnet, dass** die fünften Bereitstellungsmittel weiterhin dafür ausgelegt sind, um:

dann, wenn die Zahl der Teilnehmerendgeräte vor dem Teilnehmerendgerät (20) in der Anrufwarteschlange nicht unter dem ersten vordefinierten Grenzwert liegt, die ersten Beurteilungsmittel so zu steuern, dass sie die Beurteilung, ob die Zahl der Teilnehmerendgeräte vor dem Teilnehmerendgerät (20) in der Anrufwarteschlange niedriger als der erste vordefinierte Grenzwert ist, so oft wiederholen, bis mindestens eine der folgenden Bedingungen erfüllt ist:

- die Anzahl der Teilnehmerendgeräte vor dem Teünehmerendgerät (20) in der Anrufwarteschlange liegt unter dem ersten vordefinierten Grenzwert;
- vom Teilnehmerendgerät wird eine neue Anforderungsnachricht nach Informationen zur Warteschlangenposition empfangen;
- das Teilnehmerendgerät (20) hat die Anrufwarteschlange verlassen.

15. Die Informationsbereitstellungsmittel nach einem jeglichen der Ansprüche 9 bis 14, **dadurch gekennzeichnet, dass** die Information zur Position des Teilnehmerendgeräts (20) in der Anrufwarteschlange mindestens eine der folgenden Informationen umfasst:

- die Position des Teilnehmerendgeräts (20) in der Anrufwarteschlange;
- die Zeitdauer, die das Teilnehmerendgerät (20) in der Anrufwarteschlange warten muss.

16. Das Verfahren nach einem jeglichen der Ansprüche 9 bis 15, **dadurch gekennzeichnet, dass** das Kommunikationsnetzwerk mindestens umfasst:

- ein IP-Kommunikationsnetzwerk; oder
- ein PSTN-Kommunikationsnetzwerk.

17. Vorrichtung zur Lieferung von Warteschlangeninformationen (10), Mittel zur Bereitstellung von Informationen bezüglich einer Position eines Teilnehmerendgeräts (20) in einer Anrufwarteschlange für das Teilnehmerendgerät (20) nach einem jeglichen der Ansprüche 9 bis 16 umfassend.

**Revendications**

1. Procédé, dans un dispositif de desserte d'informations de file d'attente (10) dans un réseau de communication, de fourniture d'informations relatives à une position d'un terminal d'abonné (20) dans une file d'attente d'appels au terminal d'abonné (20) dans la file d'attente d'appels, comprenant les étapes suivantes :

a. recevoir un message de demande d'informations de position dans la file d'attente provenant du terminal d'abonné (20), le message de demande d'informations de position dans la file d'attente étant destiné à demander au dispositif de desserte d'informations de file d'attente (10) de fournir les informations relatives à la position du terminal d'abonné (20) dans la file d'attente d'appels au terminal d'abonné (20) ;
b. obtenir les informations relatives à la position du terminal d'abonné (20) dans la file d'attente d'appels et fournir les informations relatives à la position du terminal d'abonné (20) au terminal d'abonné (20),

**caractérisé par** les étapes suivantes :

c. déterminer si le nombre de terminaux d'abonné en face du terminal d'abonné (20) dans la file d'attente d'appels est inférieur à un premier seuil prédéterminé ;

d. si le nombre de terminaux d'abonné en face du terminal d'abonné (20) dans la file d'attente d'appels est inférieur au premier seuil prédéterminé, conformément à une première règle prédéfinie, obtenir des informations relatives à une position mise à jour du terminal d'abonné (20) dans la file d'attente d'appels et fournir les informations relatives à la position mise à jour du terminal d'abonné (20) au terminal d'abonné (20).

2. Procédé selon la revendication 1, **caractérisé en ce que** l'étape d comprend les étapes suivantes :

d1. si le nombre des terminaux d'abonné en face du terminal d'abonné (20) dans la file d'attente d'appels est inférieur au premier seuil prédéterminé, détecter si un ou plusieurs terminaux d'abonné de chaque terminal d'abonné en face du terminal d'abonné (20) ont quitté la file d'attente d'appels ;

d2. lorsqu'un ou plusieurs terminaux d'abonné de chaque terminal d'abonné (20) en face du terminal d'abonné (20) ont quitté la file d'attente d'appels, obtenir les informations relatives à la position mise à jour du terminal d'abonné (20) dans la file d'attente d'appels et fournir la position mise à jour du terminal d'abonné (20) au terminal d'abonné (20).

3. Procédé selon la revendication 1 ou 2, **caractérisé en ce que** l'étape d comprend en outre les étapes suivantes :

- déterminer si une période prédéterminée s'est écoulée depuis la dernière fourniture des informations relatives à la position du terminal d'abonné (20) dans la file d'attente d'appels au terminal d'abonné ;

- si la période prédéterminée s'est écoulée depuis la dernière fourniture des informations relatives à la position du terminal d'abonné (20) dans la file d'attente d'appels au terminal d'abonné, obtenir les informations relatives à la position mise à jour du terminal d'abonné (20) dans la file d'attente d'appels et fournir les informations relatives à la position mise à jour du terminal d'abonné (20) au terminal d'abonné (20).

4. Procédé selon l'une quelconque des revendications 1 à 3, comprenant en outre l'étape suivante :

d'. si le nombre de terminaux d'abonné en face du terminal d'abonné (20) dans la file d'attente d'appels n'est pas inférieur au premier seuil prédéterminé, conformément à une deuxième règle prédéfinie, obtenir les informations relatives à une position mise à jour du terminal d'abonné (20) dans la file d'attente d'appels et fournir les informations relatives à la position mise à jour du terminal d'abonné (20) au terminal d'abonné (20).

5. Procédé selon la revendication 4, **caractérisé en ce que** l'étape d' comprend les étapes suivantes :

d'1. si le nombre de terminaux d'abonné en face du terminal d'abonné (20) dans la file d'attente d'appels n'est pas inférieur au premier seuil prédéterminé, obtenir les informations relatives à la position mise à jour du terminal d'abonné (20) dans la file d'attente d'appels et fournir les informations relatives à la position mise à jour du terminal d'abonné (20) au terminal d'abonné (20) chaque fois qu'un changement de la position du terminal d'abonné (20) dans la file d'attente d'appels atteint un deuxième seuil prédéterminé ;

d'2. répéter l'étape d'1 jusqu'à ce que le nombre des terminaux d'abonné en face du terminal d'abonné (20) dans la file d'attente d'appels soit inférieur au premier seuil prédéterminé.

6. Procédé selon la revendication 4, **caractérisé en ce que** l'étape d comprend l'étape suivante :

répéter l'étape c jusqu'à ce qu'au moins une des conditions suivantes soit satisfaite :

- le nombre des terminaux d'abonné en face du terminal d'abonné (20) dans la file d'attente d'appels est inférieur au premier seuil prédéterminé ;

- un nouveau message de demande d'informations de position dans la file d'attente provient du terminal d'abonné (20) ;

- le terminal d'abonné (20) a quitté la file d'attente d'appels.

7. Procédé selon l'une quelconque des revendications 1 à 6, **caractérisé en ce que** les informations relatives à la position du terminal d'abonné (20) dans la file d'attente d'appels comprennent au moins une des informations suivantes :

- la position du terminal d'abonné (20) dans la file d'attente d'appels ;

- la période durant laquelle le terminal d'abonné (20) doit attendre dans la file d'attente d'appels.

8. Procédé selon l'une quelconque des revendications 1 à 7, **caractérisé en ce que** le réseau de communication comprend au moins un des réseaux suivants :

    - un réseau de communication IP ;
    - un réseau de communication RTPC.

9. Moyens de fourniture d'informations, dans un dispositif de desserte d'informations de file d'attente (10), pour fournir des informations relatives à une position d'un terminal d'abonné (20) dans une file d'attente d'appels au terminal d'abonné (20) dans la file d'attente d'appels, comprenant :

    des moyens de réception pour recevoir un message de demande d'informations de position dans la file d'attente provenant du terminal d'abonné (20), le message de demande d'informations de position dans la file d'attente étant destiné à demander au dispositif de desserte d'informations de file d'attente (10) de fournir les informations relatives à la position du terminal d'abonné (20) dans la file d'attente d'appels au terminal d'abonné (20) ;
    des premiers moyens de fourniture pour obtenir les informations relatives à la position du terminal d'abonné (20) dans la file d'attente d'appels et pour fournir les informations relatives à la position du terminal d'abonné (20) au terminal d'abonné (20), **caractérisés par** :

        des premiers moyens de détermination pour déterminer si le nombre de terminaux d'abonné en face du terminal d'abonné (20) dans la file d'attente d'appels est inférieur à un premier seuil prédéterminé ;
        des deuxièmes moyens de fourniture pour, conformément à une première règle prédéfinie, obtenir les informations relatives à une position mise à jour du terminal d'abonné (20) dans la file d'attente d'appels et pour fournir les informations relatives à la position mise à jour du terminal d'abonné (20) au terminal d'abonné (20), si le nombre de terminaux d'abonné en face du terminal d'abonné (20) dans la file d'attente d'appels est inférieur au premier seuil prédéterminé.

10. Moyens de fourniture d'informations selon la revendication 9, **caractérisés en ce que** les deuxièmes moyens de fourniture comprennent :

    des moyens de détection pour, si le nombre des terminaux d'abonné en face du terminal d'abonné (20) dans la file d'attente d'appels est inférieur au premier seuil prédéterminé, détecter si un ou plusieurs terminaux d'abonné de chaque terminal d'abonné (20) en face du terminal d'abonné (20) ont quitté la file d'attente d'appels ;
    des troisièmes moyens de fourniture pour, lorsqu'un ou plusieurs terminaux d'abonné de chaque terminal d'abonné (20) en face du terminal d'abonné (20) ont quitté la file d'attente d'appels, obtenir les informations relatives à la position mise à jour du terminal d'abonné (20) dans la file d'attente d'appels et pour fournir la position mise à jour du terminal d'abonné (20) au terminal d'abonné (20).

11. Moyens de fourniture d'informations selon la revendication 10, **caractérisés en ce que** les deuxièmes moyens de fourniture comprennent en outre :

    des deuxièmes moyens de détermination pour déterminer si une période prédéterminée s'est écoulée depuis la dernière fourniture des informations relatives à la position du terminal d'abonné (20) dans la file d'attente d'appels au terminal d'abonné (20);
    des quatrièmes moyens de fourniture pour, si la période prédéterminée s'est écoulée depuis la dernière fourniture des informations relatives à la position du terminal d'abonné (20) dans la file d'attente d'appels au terminal d'abonné (20), obtenir les informations relatives à la position mise à jour du terminal d'abonné (20) dans la file d'attente d'appels et pour fournir les informations relatives à la position mise à jour du terminal d'abonné (20) au terminal d'abonné (20).

12. Moyens de fourniture d'informations selon la revendication 11, comprenant en outre :

    des cinquièmes moyens de fourniture pour, si le nombre de terminaux d'abonné en face du terminal d'abonné (20) dans la file d'attente d'appels n'est pas inférieur au premier seuil prédéterminé, conformément à une deuxième règle prédéfinie, obtenir les informations relatives à la position mise à jour du terminal d'abonné (20) dans la file d'attente d'appels et pour fournir les informations relatives à la position mise à jour du terminal d'abonné (20) au terminal d'abonné (20).

13. Moyens de fourniture d'informations selon la revendication 12, **caractérisés en ce que** les cinquièmes moyens de fourniture sont en outre adaptés pour :

    - si le nombre de terminaux d'abonné en face du terminal d'abonné (20) dans la file d'attente d'appels n'est pas inférieur au premier seuil prédéterminé, obtenir les informations relatives à la position mise à jour du terminal d'abonné (20) dans la file d'attente d'appels et pour fournir les informations relatives à la position mise à jour du terminal d'abonné (20) au terminal d'abonné (20) chaque fois qu'un changement de la position du terminal d'abonné (20) dans la file d'attente d'appels atteint un deuxième seuil prédéterminé ;

- répéter l'opération susmentionnée jusqu'à ce que le nombre des terminaux d'abonné en face du terminal d'abonné (20) dans la file d'attente d'appels soit inférieur au premier seuil prédéterminé.

**14.** Moyens de fourniture d'informations selon la revendication 12, **caractérisés en ce que** les cinquièmes moyens de fourniture sont en outre adaptés pour :

si le nombre des terminaux d'abonné en face du terminal d'abonné (20) dans la file d'attente d'appels n'est pas inférieur au premier seuil prédéterminé, contrôler les premiers moyens de détermination pour répéter la détermination selon laquelle le nombre de terminaux d'abonné en face du terminal d'abonné (20) dans la file d'attente d'appels est inférieur ou non au premier seuil prédéterminé jusqu'à ce qu'au moins une des conditions suivantes soit satisfaite :

- le nombre des terminaux d'abonné en face du terminal d'abonné (20) dans la file d'attente d'appels est inférieur au premier seuil prédéterminé ;
- un nouveau message de demande d'informations de position dans la file d'attente provient du terminal d'abonné ;
- le terminal d'abonné (20) a quitté la file d'attente d'appels.

**15.** Moyens de fourniture d'informations selon l'une quelconque des revendications 9 à 14, **caractérisés en ce que** les informations relatives à la position du terminal d'abonné (20) dans la file d'attente d'appels comprennent au moins une des informations suivantes :

- la position du terminal d'abonné (20) dans la file d'attente d'appels;
- la période durant laquelle le terminal d'abonné (20) doit attendre dans la file d'attente d'appels.

**16.** Moyens de fourniture d'informations selon l'une quelconque des revendications 9 à 15, **caractérisés en ce que** le réseau de communication comprend au moins un des réseaux suivants :

- un réseau de communication IP ;
- un réseau de communication RTPC.

**17.** Dispositif de desserte d'informations de file d'attente (10), comprenant des moyens de fourniture d'informations pour fournir des informations relatives à une position d'un terminal d'abonné (20) dans une file d'attente d'appels au terminal d'abonné (20) dans la file d'attente d'appels selon l'une quelconque des revendications 9 à 16.

**Fig. 1**

```
                    ┌──┐   ┌─ 20                              ┌─ 10
                    │  │
                    │  │

S20. Generating a
queue information
  request message

              S21. Sending the queue information request
                              message

           S10. Obtaining the information in relation to the
           position of subscriber terminal 20 in the call-
           waiting queue according to the queue information
           request message and providing it to subscriber
                          terminal 20


                                      S11. the number of
                                   subscriber terminals in
                                     front of subscriber
                                   terminal 20 is less than a
                                    first predetermined              NO
                                        threshold?

           S12. Obtaining the information in relation to
            the position of subscriber terminal 20 in the     YES
               call-waiting queue and providing it to
             subscriber terminal 20 according to a first
                           preset rule

            S12'. Obtaining the information in relation to
             the position of subscriber terminal 20 in the
                call-waiting queue and providing it to
             subscriber terminal 20 according to a second
                           preset rule

S22. informing the information in relation to
the position of subscriber terminal 20 to the
              subscriber
```

Fig. 2

**1) INVITE**

2) Check the status of the operators, and find all operators are busy, then put subscriber terminal 20 in call-waiting queue 120.

**3) 182 Queue**

**4) Wait for a while.**

**5) SUBSCRIBE（ request for the position information）**

**6) 200 OK**

**7) NOTIFY (provide the position information)**

**8) 200 OK**

**9) initiate the query of the position information or send CANCEL to hang off**

**Fig. 3**

EP 2 278 782 B1

Fig. 4

Fig. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 02093893 A